# FASCICULE DE BREVET EUROPEEN

(11) **EP 1 271 977 B1**
(45) Date de publication et mention de la délivrance du brevet: **05.01.2011**
(21) Numéro de dépôt: 02291429.5
(22) Date de dépôt: 10.06.2002
(51) Int. Cl.: H04W 88/02, H04B 7/26, H04J 3/06

(54) **Procédé de basculement d'un premier mode de radiocommunication vers un second mode de radiocommunication et terminal mobile multi-mode associé**
Verfahren zum umschalten von einem ersten Funkkommunikationsmodus zu einem zweiten Funkkommunikationsmodus und Funkendgerät mit Vielfachmodus dafür
Method for switching from a first radio communication mode to a second radio communication mode and a multimode mobile terminal therefor

(30) Priorité: 28.06.2001 FR 0108538
(43) Date de publication de la demande: 02.01.2003
(73) Titulaire: IPG Electronics 504 Limited, St Peter Port Guernsey GY1 3QL (GB)
(72) Inventeur: Leprieur, Philippe, 92600 Asnieres (FR); Da Rocha, Alexandre, Santa Clara, CA 95050 (US); Rouvellou, Laurent, 75012 Paris (FR)
(74) Mandataire: Talbot-Ponsonby, Clare Josephine

(56) Documents cités:
- EP-A- 0 966 116
- EP-A- 1 073 303
- WO-A-96/38991

## Description

La présente invention concerne le domaine des télécommunications mobiles et plus spécifiquement l'utilisation de terminaux de radiocommunication mobiles dits multi-modes c'est à dire aptes à communiquer selon l'un ou l'autre d'au moins deux modes de radiocommunication.

Parmi les modes de radiocommunication connus actuellement, on peut citer, par exemple, le mode GSM (Global System for Mobile Communication) dit de deuxième génération ou le mode UMTS (Universal Mobile Telecommunications Systems) dit de troisième génération, et également le mode PCS (Personal Communication Services) en vigueur sur le territoire américain.

Classiquement, un terminal de radiocommunication mobile établit ses communications par l'intermédiaire de stations de base selon une technologie de transmission radio (RAT pour Radio Access Technology en anglais). Ainsi, différentes technologies peuvent coexister avec des stations de base dédiées à un premier mode de radiocommunication, par exemple des BTS (Base Transceiver Station) pour le GSM, et des stations dédiées à un second mode de radiocommunication, par exemple des antennes UTRAN (UMTS Terrestrial Radio Access Network). D'autres technologies RAT peuvent néanmoins apparaîtrent avec d'autres modes de radiocommunication et entrer dans la problématique présentée par l'invention.

Dans un tel contexte, il apparaît primordial qu'un terminal de radiocommunication mobile puisse fonctionner selon l'un ou l'autre standard associé à un quelconque mode de radiocommunication en vigueur, c'est à dire avec l'une ou l'autre technologie RAT associée auxdits modes. Une telle interopérabilité est indispensable pour trois raisons principales : Pour maintenir une continuité de service lors d'une communication et hors communication lorsque le terminal est en mode veille et pour la réalisation de mesures.

Pour établir une communication quelconque, un terminal mobile doit être associé à une station de base correspondant à la zone géographique dans laquelle il se situe et qui peut être dédiée à une quelconque technologie RAT en vigueur sur le territoire concerné. La station de base transmet la communication vers un contrôleur qui la transmet à un central de commutation qui dirige la communication vers la station de base à laquelle le terminal destinataire est associé ou vers un autre réseau du terminal destinataire (Internet, PSTN (Public Switched Telecommunication/Telephone Network) ou autre). Lors d'un déplacement du terminal mobile, un relais (connu sous le terme anglais de handover) doit être assuré afin de garantir la continuité de service dans la communication en cours. Ce relais peut avoir lieu entre des stations de base de la même technologie ou entre des stations de base de technologies RAT différentes.

Hors communication, un terminal mobile doit maintenir un état de veille pendant lequel il est également associé à une station de base. Lors d'un déplacement, le terminal mobile peut effectuer une re-sélection pour se raccrocher à une station de base de sa nouvelle zone géographique. Une telle ré-sélection est également réalisée lorsque le terminal mobile communique en mode par paquets de données tel que le GPRS par exemple (General Packet Radio Services).

Enfin, un terminal mobile de radiocommunication multi-mode doit pouvoir supporter des mesures régulières avec une station de base d'un premier mode (par exemple GSM) alors qu'il est en liaison radio avec une station de base d'un autre mode (par exemple UMTS). De telles mesures sont souvent imposées par les organismes de standardisations qui régulent les différents systèmes de radiocommunication en vigueur ou en projet.

Or, une interopérabilité (handover, re-sélection, mesures) entre plusieurs technologies RAT n'est pas forcément garantie, en particulier parce que chaque mode de radiocommunication possède sa propre base de temps. Ainsi, dans l'exemple des deux modes GSM et UMTS, les périodes des trames radio pour les communications ne sont pas les mêmes, la première étant fixée à 4.615 ms et la seconde à 10ms respectivement par les standards GSM et UMTS. Il ne s'agit pas d'une simple désynchronisation entre stations de base, mais bien d'un référentiel temporel différent entre les deux standards.

Un terminal mobile multi-mode, en liaison radio avec une station de base d'un premier mode, doit donc être en mesure de connaître l'heure exacte dans au moins un autre mode. Il est donc important qu'un terminal mobile multi-mode soit apte à déterminer le décalage temporel entre deux modes de radiocommunication donnés afin de pouvoir passer de l'un à l'autre, en cours de communication, en mode veille ou pour la réalisation de mesures.

Une solution possible consiste à maintenir une écoute régulière d'un mode simultanément à l'utilisation d'un autre mode (par exemple maintenir une écoute des stations GSM alors qu'une communication est effectuée par des stations UMTS). Une telle solution n'est cependant pas optimale car coûteuse en énergie et donc en autonomie pour le terminal mobile.

Le document EP 0966116 décrit une méthode de calcul du décalage temporel entre les horloges de deux modes de radiocommunication afin de permettre la synchronisation d'un terminal en mode GSM en utilisant le signal d'horloge de l'autre mode de radiocommunication.

La présente invention a ainsi pour objectif de proposer un autre procédé de détermination du décalage temporel entre au moins deux modes de radiocommunication pour permettre à un terminal mobile multi-mode d'établir une communication selon l'une ou l'autre technologie d'accès radio associée respectivement à chaque mode de radiocommunication.

Par exemple, la présente invention a pour objectif de permettre à un terminal mobile de connaître l'heure dans le mode GSM alors qu'il fonctionne dans un mode UMTS, et vice versa.

L'invention concerne plus spécifiquement un procédé de basculement d'un premier mode de radiocommunication vers un second mode de radiocommunication dans un terminal mobile de radiocommunication multi-mode comportant au moins une première et une seconde partie fonctionnant respectivement selon une première et une seconde technologie d'accès radio associée au premier et second mode de radiocommunication et munie respectivement d'une première et seconde horloge, le procédé comportant les étapes suivantes :
- Verrouillage d'une première partie du terminal mobile sur un premier des modes de radicommunication avec une première horloge associée ;
- Calcul du décalage temporel entre les horloges de deux modes de radiocommunication par le terminal mobile ;
- Correction de l'heure d'une seconde partie du terminal à partir dudit calcul du décalage temporel ;
- Basculement d'une seconde partie du terminal mobile sur un second des modes de radiocommunication avec la seconde horloge associée, **caractérisé en ce que,**
- le calcul du décalage temporel comporte les étapes suivantes :
   - Détection du début d'une trame radio de la première technologie associée au premier mode de radiocommunication;
   - Enregistrement de l'heure indiquée par la première horloge associée audit premier mode et déclenchement d'un compteur ;
   - Détection du début d'une trame radio de la technologie associée au second mode de radiocommunication ;
   - Enregistrement de l'heure actualisée indiquée par la première horloge associée audit premier mode et de l'heure indiquée par la seconde horloge associée audit second mode de radiocommunication, et arrêt du compteur;
   - Calcul du décalage temporel à partir des heures enregistrées par les première et seconde horloges et de la valeur du compteur.

Selon une caractéristique, l'alimentation d'au moins une partie du terminal fonctionnant selon un des modes de radiocommunication est coupée, ledit procédé comportant une étape d'éveil de ladite partie par une autre partie fonctionnant selon un autre mode de radiocommunication et une étape de mise à l'heure de ladite partie éveillée du terminal.

La présente invention concerne également un terminal mobile de radiocommunication multi-mode, comportant des moyens de contrôle, et comportant au moins deux parties aptes à communiquer respectivement selon une première ou une seconde technologie d'accès radio respectivement associée à un premier et second mode de radiocommunication distincts, et munie respectivement d'une première et seconde horloge, comportant :
- des moyens de verrouillage d'une première partie du terminal mobile sur un premier des modes de radicommunication avec une première horloge associée ;
- des moyens de calcul du décalage temporel entre les horloges de deux modes de radiocommunication par le terminal mobile;
- des moyens de correction de l'heure d'une seconde partie du terminal à partir dudit calcul du décalage temporel;
- des moyens de basculement d'une seconde partie du terminal mobile sur un second des modes de radiocommunication avec la seconde horloge associée, **caractérisé en ce que**,
les moyens de calcul du décalage temporel comporte:
- des moyens de détection du début d'une trame radio de la première technologie associée au premier mode de radiocommunication;
- des moyens d'enregistrement de l'heure indiquée par la première horloge associée audit premier mode et déclenchement d'un compteur;
- des moyens de détection du début d'une trame radio de la technologie associée au second mode de radiocommunication ;
- des moyens d'enregistrement de l'heure actualisée indiquée par la première horloge associée audit premier mode et de l'heure indiquée par la seconde horloge associée audit second mode de radiocommunication, et arrêt du compteur ;
- des moyens de calcul du décalage temporel à partir des heures enregistrées par les première et seconde horloges et de la valeur du compteur.

Selon une caractéristique, le compteur possède une horloge de périodicité plus petite que celles des compteurs de trames des deux technologies d'accès radio.

Selon une caractéristique, le terminal comporte en outre des moyens de commutation de l'alimentation d'au moins une partie du terminal sur commande des moyens de contrôle.

Les particularités et avantages de l'invention apparaîtront clairement à la lecture de la description qui suit, donnée à titre d'exemple illustratif et non limitatif, et faite en référence aux figures annexées dans lesquelles :
La figure 1 illustre schématiquement les trames radio dans deux technologies d'accès radio différentes (GSM et UMTS dans l'exemple illustré) ;
La figure 2 est un schéma d'implémentation du procédé selon l'invention ;
La figure 3 illustre schématiquement une application du procédé selon la présente invention.

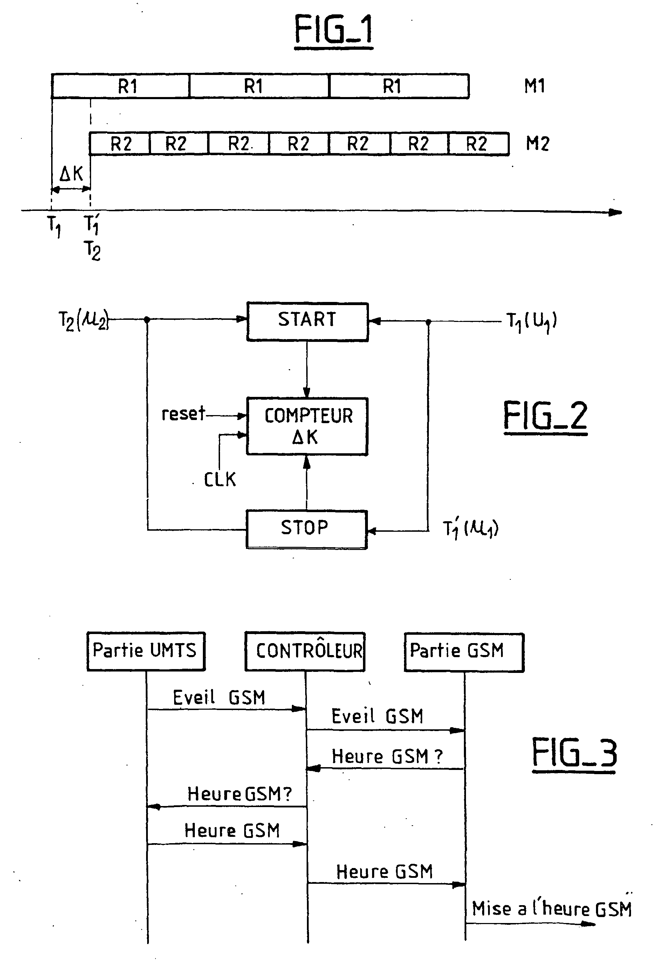

En référence à la figure 1, il est clair que le décalage temporel entre les trames radio de deux technologies associées à deux modes de radiocommunication distincts n'est pas un simple décalage de désynchronisation, mais relève bien d'un décalage des bases temporelles. Les trames radio R1 de la première technologie, par exemple UTRAN sont ainsi fixées à 10 ms, alors que celles R2 associées à la seconde technologie, par exemple GSM sont fixées à 4.615 ms par les standards respectifs. L'objectif de l'invention est de permettre un basculement correct d'une trame R1 à une trame R2 respectivement associées à deux quelconques technologies d'accès radio distinctes.

On nomme T₁ le début d'une trame R1 (associée à un premier mode M1) et T₂ le début d'une trame R2 (associée à un second mode M2). T₁' correspond à l'heure dans le premier mode au moment du début d'une trame R2 dans le second mode et ΔK exprime le décalage entre le début des trames R1 et R2 de chaque mode, c'est à dire ΔK=T₁'-T₁=T₂-T₁

Les heures dans chacune des technologies RAT associées à chacun des modes sont données par des horloges U1 et U2 composées par des compteurs fixant d'une part la durée d'une trame radio et d'autre part permettant un découpage temporel de ces trames grâce à des compteurs plus fins.

Ainsi, par exemple, si le premier mode de radiocommunication M1 est associé à la technologie UTRAN, l'horloge U1 correspondante possède un compteur de trame dit SFN pour « Super Frame Number » et des compteurs « de sous trame » plus précis tels que ceux connus sous les termes de « timeslot » et « chip counters ». Ces compteurs ont des horloges de périodicité plus courte que le compteur de trame et sont classiques et généralisés dans la technologie UTRAN. De même, si le second mode de radiocommunication M2 est associé à la technologie GSM, l'horloge U2 correspondante possède également des compteurs classiques et communément utilisés, tels que des compteurs de trames dits T1, T2, T3 et des compteurs « de sous trame » dits « timeslot » et « quater bit counters ». Tous ces compteurs, parfaitement connus de l'état de la technique, permettent de définir l'heure précise dans chaque mode de radiocommunication standardisé. L'invention cherche à déterminer le décalage temporel entre au moins ces deux référentiels de temps.

La figure 2 illustre plus spécifiquement la mise en oeuvre de l'invention. Un compteur ΔK est enclenché par le début d'une trame R1 du premier mode M1 et arrêté par le début d'une trame R2 du second mode M2. Ce compteur ΔK est « rapide » c'est à dire possède une horloge CLK de périodicité plus petite que celle des compteurs de trames des deux technologies RAT considérées.

Le procédé selon l'invention présente donc les étapes suivantes :
- Le terminal mobile est verrouillé sur une station de base d'une première technologie RAT (par exemple une station UTRAN). Lors du début d'une trame R1 de cette première technologie, l'heure T₁ est relevée et le compteur ΔK enclenché par un signal provenant du bloc logique « start ».
- Le terminal mobile surveille les émissions radio de la deuxième technologie RAT (par exemple les émissions GSM) et détecte le début d'une trame R2 de cette seconde technologie. Le compteur ΔK est alors arrêté par un signal provenant du bloc logique « stop » et l'heure T₂ de la seconde technologie est relevée ainsi que l'heure actualisée T₁' de la première horloge U1.
- Le microcontrôleur du terminal mobile calcule alors le décalage temporel Δt entre les deux technologies RAT à partir des données ΔK, T₁, T₁' et T₂.
- Le terminal mobile modifie son horloge et peut effectuer des mesures ou une communication selon la seconde technologie RAT.

L'heure T₁ est donnée par le compteur de trame associé à la première technologie (par exemple le compteur SFN de la technologie UMTS), les autres compteurs plus fins (Timeslot et chip counters) étant mis à zéro. De même, l'heure T₂ est donnée par le compteur de trame associé à la seconde technologie (par exemple le compteur T1,T2,T3 de la technologie GSM), les autres compteurs plus fins (Timeslot et quaterbit counters) étant mis à zéro. En revanche, l'heure actualisée T₁' est exprimée à l'aide des compteurs « de sous trame » pour indiquer un intervalle de temps interne à la période de la trame. La valeur du compteur ΔK est exprimée en unité de temps de l'une ou l'autre technologie RAT selon le point de départ du procédé.

L'implémentation du procédé selon l'invention dans un terminal mobile nécessite l'ajout d'un compteur ΔK et de circuits logiques constituant les blocs logiques « start » et « stop » de commande du compteur. Une telle implémentation ne présente aucune difficulté particulière.

L'invention consiste donc, à un instant donné, à calculer, au niveau du terminal mobile, le décalage temporel Δt entre deux modes associés à deux technologies différentes RAT. Ce décalage Δt n'est pas constant dans le temps, mais si on connaît les périodes des trames R1 et R2 associées à chacune des technologies RAT, et que l'on connaît le décalage Δt à un instant donné, on peut maintenir une connaissance du décalage temporel entre les deux modes de radiocommunication dans le temps.

Une application avantageuse de la présente invention est présentée en référence à la figure 3. Un terminal de radiocommunication mobile multi-mode comporte différentes parties respectivement dédiées à une communication selon différentes technologies RAT associées chacune à un mode de radiocommunication donné. Pour garantir une bonne interopérabilité du terminal selon l'une ou l'autre technologie RAT, telle que précédemment décrit, il est nécessaire que ledit terminal maintienne une synchronisation temporelle sur chacune des technologies RAT qu'il peut être amené à utiliser.

Ainsi, selon l'invention, un terminal mobile multi-mode, associé à une station de base dépendant d'un premier mode de radiocommunication, peut maintenir directement, dans sa mémoire, une connaissance précise de l'heure d'au moins un autre mode de radiocommunication.

Dans un terminal multi-mode, un microcontrôleur contrôle les différentes parties associées à chaque mode, par exemple, une partie UMTS et une partie GSM. Lorsque le mobile est verrouillé sur une station de base d'un premier mode (par exemple UTRAN), l'alimentation de la partie au second mode (par exemple GSM) peut être coupée pour permettre une économie d'énergie. Lorsqu'une mesure sur une station de ce second mode est nécessaire, par exemple environ toutes les trente secondes selon les exigences du standard UMTS, la partie associée au premier mode peut éveiller la seconde par l'intermédiaire du microcontrôleur et mettre le terminal à l'heure dudit second mode.

En effet, la partie associée au premier mode peut maintenir l'heure du second mode à partir d'un calcul du décalage Δt à un instant donné comme précédemment décrit.

La détermination du décalage temporel Δt entre les deux modes de radiocommunication nécessite l'attente d'un premier événement qui est le début d'une trame radio du premier mode et l'attente d'un second événement qui est le début d'une trame radio du second mode, c'est à dire dans l'exemple considéré 10+4.615 ms. En majorant avec le temps nécessaire à la mise en oeuvre du procédé selon l'invention, on obtient le calcul du décalage temporel Δt en 20 à 25 ms.

Cela peut avoir une application pratique avantageuse qui consiste à couper l'alimentation d'une des parties du terminal dédiée à un mode non utilisé pour ne l'éveiller qu'au moment où ce mode sera utilisé pour une mesure ou une communication. Cela est évidemment intéressant en terme de consommation d'énergie et donc d'autonomie du terminal mobile. Par exemple, si on maintenait simplement la partie GSM en veille, une mesure serait effectuée toutes les 2 ms alors qu'une telle fréquence n'est pas nécessaire dans le cadre de la standardisation.

La description et les dessins font référence aux technologies RAT GSM et UTRAN. La présente invention peut néanmoins être appliquée à des technologies RAT quelconques avec des bases de temps différentes.

## Revendications

1. Procédé de basculement d'un premier mode de radiocommunication (M1) vers un second mode de radiocommunication (M2) dans un terminal mobile de radiocommunication multi-mode comportant au moins une première et une seconde partie fonctionnant selon une première ou une seconde technologie d'accès radio (RAT) respectivement associée au premier et second mode de radiocommunication et munie respectivement d'une première et seconde horloge (U1, U2), le procédé comportant les étapes suivantes :
- Verrouillage d'une première partie du terminal mobile sur un premier des modes de radicommunication (M1) avec une première horloge (U1) associée ;
- Calcul du décalage temporel (Δt) entre les horloges (U1, U2) de deux modes de radiocommunication (M1, M2) par le terminal mobile ;
- Correction de l'heure d'une seconde partie du terminal à partir dudit calcul du décalage temporel (Δt) ;
- Basculement d'une seconde partie du terminal mobile sur un second des modes de radiocommunication (M2) avec la seconde horloge (U2) associée, **caractérisé en ce que**,
le calcul du décalage temporel (Δt) comporte les étapes suivantes :
- Détection du début d'une trame radio (R1) de la première technologie (RAT) associée au premier mode de radiocommunication (M1);
- Enregistrement de l'heure (T₁) indiquée par la première horloge (U1) associée audit premier mode et déclenchement d'un compteur (ΔK) ;
- Détection du début d'une trame radio (R2) de la technologie (RAT) associée au second mode de radiocommunication (M2) ;
- Enregistrement de l'heure actualisée (T₁') indiquée par la première horloge associée audit premier mode et de l'heure (T₂) indiquée par la seconde horloge (U2) associée audit second mode de radiocommunication, et arrêt du compteur (ΔK) ;
- Calcul du décalage temporel (Δt) à partir des heures enregistrées par les première et seconde horloges (T₁, T₂) et de la valeur du compteur (ΔK).

2. Procédé selon la revendication 1, **caractérisé en ce que** l'alimentation d'au moins une partie du terminal fonctionnant selon un des modes de radiocommunication (M2) est coupée et **en ce que** ledit procédé comporte une étape d'éveil de ladite partie par une seconde partie fonctionnant selon un autre mode de radiocommunication (M1) et une étape de mise à l'heure de ladite partie éveillée du terminal.

3. Procédé selon l'une quelconque des revendications précédentes, **caractérisé en ce que** le premier et le second mode de radiocommunication sont respectivement les modes GSM et/ou UMTS.

4. Terminal mobile de radiocommunication multi-mode, comportant des moyens de contrôle, et comportant au moins deux parties aptes à communiquer respectivement selon une première ou une seconde technologie d'accès radio (RAT) respectivement associée à un premier et second mode de radiocommunication (M1, M2) distincts, et munie respectivement d'une première et seconde horloge (U1, U2), comportant :
- des moyens de verrouillage d'une première partie du terminal mobile sur un premier des modes de radicommunication (M1) avec une première horloge (U1) associée ;
- des moyens de calcul du décalage temporel (Δt) entre les horloges (U 1, U2) de deux modes de radiocommunication (M1, M2) par le terminal mobile ;
- des moyens de correction de l'heure d'une seconde partie du terminal à partir dudit calcul du décalage temporel (Δt) ;
- des moyens de basculement d'une seconde partie du terminal mobile sur un second des modes de radiocommunication (M2) avec la seconde horloge (U2) associée, **caractérisé en ce que**,
les moyens de calcul du décalage temporel (Δt) comporte :
- des moyens de détection du début d'une trame radio (R1) de la première technologie (RAT) associée au premier mode de radiocommunication (M1) ;
- des moyens d'enregistrement de l'heure (T₁) indiquée par la première horloge (U1) associée audit premier mode et déclenchement d'un compteur (ΔK) ;
- des moyens de détection du début d'une trame radio (R2) de la technologie (RAT) associée au second mode de radiocommunication (M2) ;
- des moyens d'enregistrement de l'heure actualisée (T₁') indiquée par la première horloge associée audit premier mode et de l'heure (T₂) indiquée par la seconde horloge (U2) associée audit second mode de radiocommunication, et arrêt du compteur (ΔK) ;
- des moyens de calcul du décalage temporel (Δt) à partir des heures enregistrées par les première et seconde horloges (T₁, T₂) et de la valeur du compteur (ΔK).

5. Terminal mobile selon la revendication 4, **caractérisé en ce que** le compteur (ΔK) possède une horloge (CLK) de périodicité plus petite que celles des compteurs de trames des technologies d'accès radio.

6. Terminal mobile selon l'une des revendications 4 à 5, **caractérisé en ce qu'**il comporte en outre des moyens de commutation de l'alimentation d'au moins une partie du terminal sur commande des moyens de contrôle.

7. Terminal mobile selon l'une des revendications 4 à 6, **caractérisé en ce que** les moyens de contrôle du terminal sont un microcontrôleur.

## Claims

1. Method for switching a first radio communication mode (M1) toward a second radio communication mode (M2) in a multi mode radio communication mobile terminal comprising at least a first and a second part operating according to a first and a second radio access technology (RAT) respectively associated with the first and second radio communication mode and provided, respectively, with a first and second clock (U1, U2), the method comprising the following steps:
- Locking of a first part of the mobile terminal on a first of the radio communication modes (M1) with a first associated clock (U1);
- Calculating the time-lag (Δt) between the clocks (U1, U2) of two radio communication modes (M1, M2) by the mobile terminal;
- Correcting the time of a second part of the terminal from said time-lag (Δt) calculation;
- Switching of a second part of the mobile terminal to a second of the radio communication modes (M2) with the second associated clock (U2), **characterized in that**:
the calculation of the time-lag (Δt) comprises the following steps:
- Detecting the beginning of a radio frame (R1) of the first technology (RAT) associated with the first radio communication mode (M1);
- Recording the time (T₁) indicated by the first clock (U1) associated with said first mode and triggering a counter (ΔK);
- Detecting the beginning of a radio frame (R2) of the technology (RAT) associated with the second radio communication mode (M2);
- Recording the updated time (T₁') indicated by the first clock associated with said first mode and the time (T₂) indicated by the second clock (U2) associated with said second radio communication mode, and stopping the counter (ΔK);
- Calculating the time-lag (Δt) from the times recorded by the first and second clocks (T₁, T₂) and the value of the counter (ΔK).

2. Method according to claim 1, **characterized in that** the power supply of at least one part of the terminal operating according to one of the radio communication modes (M2) is cut off, and **in that** said method comprises a wake-up phase of said part by a second part operating according to another radio communication mode (M1) and a phase for setting the time of said awake part of the terminal.

3. Method according to any of the previous claims, **characterized in that** the first and the second radio communication modes are the GSM and/or UMTS modes, respectively.

4. Multi-mode radio communication mobile terminal comprising control means and comprising at least two parts adapted to communicate, respectively, according to a first or a second radio access technology (RAT), respectively associated with a first and a second distinct radio communication modes (M1, M2), and provided respectively with a first and a second clock (U1, U2), comprising:
- means for locking a first part of the mobile terminal on a first of the radio communication modes (M1) with a first associated clock (U1);
- means for calculating the time-lag (Δt) between the clocks (U1, U2) of two radio communication modes (M1, M2) by the mobile terminal;
- means for correcting the time of a second part of the terminal from said calculation of the time-lag (Δt);
- means for switching a second part of the mobile terminal to a second of the radio communication modes (M2) with the second associated clock (U2), **characterized in that**
the calculation means of the time-lag comprise (Δt):
- means for detecting the beginning of a radio frame (R1) of the first technology (RAT) associated with the first radio communication mode (M1);
- means for recording the time (T₁) indicated by the first clock (U1) associated with said first mode and triggering of a counter (ΔK);
- means for detecting the beginning of a radio frame (R2) of the technology (RAT) associated with the second radio communication mode (M2);
- means for recording the updated time (T₁') indicated by the first clock associated with said first mode and the time (T₂) indicated by the second clock (U2) associated with said second radio communication mode, and stopping of the counter (ΔK);
- means for calculating the time-lag (Δt) from the times recorded by the first and second clocks (T₁, T₂) and the value of the counter (ΔK).

5. Mobile terminal according to claim 4, **characterized in that** the counter (ΔK) has a periodicity clock (CLK) which is smaller than those of the frame counters of radio access technologies.

6. Mobile terminal according to one of claims 4 to 5, **characterized in that** it further comprises means for switching the power supply of at least one part of the terminal by command of the control means.

7. Mobile terminal according to one of claims 4 to 6, **characterized in that** the control means of the terminal are a microcontroller.

## Patentansprüche

1. Verfahren zur Umschaltung von einem ersten Funkkommunikationsmodus (M1) in einen zweiten Funkkommunikationsmodus (M2) in einem tragbaren Multimodus-Funkkommunikationsendgerät, das mindestens einen ersten und einen zweiten Teil umfasst, die gemäß einer ersten oder einer zweiten Funkzugangstechnologie (RAT) arbeiten, die jeweils mit einem ersten und einem zweiten Funkkommunikationsmodus verbunden sind und jeweils mit einer ersten und einer zweiten Uhr (U1, U2) versehen sind, wobei das Verfahren die folgenden Schritte umfasst:
- Sperren eines ersten Teils des tragbaren Endgeräts in einem ersten der Funkkommunikationsmodi (M1) mit einer damit verbundenen ersten Uhr (U1);
- Berechnen des Zeitunterschieds (Δt) zwischen den Uhren (U1, U2) der zwei Funkkommunikationsmodi (M1, M2) durch das tragbare Endgerät;
- Korrigieren der Zeit eines zweiten Teils des Endgeräts auf Grundlage der Berechnung des Zeitunterschieds (Δt);
- Umschalten eines zweiten Teils des tragbaren Endgeräts in einen zweiten der Funkkommunikationsmodi (M2) mit der damit verbundenen zweiten Uhr (U2), **dadurch gekennzeichnet, dass**
das Berechnen des Zeitunterschieds (Δt) die folgenden Schritte umfasst:
- Erfassen des Beginns eines Funkrahmens (R1) der ersten Technologie (RAT), der mit dem ersten Funkkommunikationsmodus (M1) verbunden ist;
- Aufzeichnen der Zeit (T₁), die von der ersten Uhr (U1) angezeigt wird, die mit dem ersten Modus verbunden ist, und Auslösen eines Zählwerks (ΔK);
- Erfassen des Beginns eines Funkrahmens (R2) der Technologie (RAT), der mit dem zweiten Funkkommunikationsmodus (M2) verbunden ist;
- Aufzeichnen der aktualisierten Zeit (T₁'), die von der ersten Uhr angezeigt wird, die mit dem ersten Modus verbunden ist, und der Zeit (T₂), die von der zweiten Uhr (U2) angezeigt wird, die mit dem zweiten Funkkommunikationsmodus verbunden ist, und Anhalten des Zählwerks (ΔK);
- Berechnen des Zeitunterschieds (Δt) auf Grundlage der aufgezeichneten Zeiten von der ersten und der zweiten Uhr (T₁, T₂) und des Werts des Zählwerks (ΔK).

2. Verfahren nach Anspruch 1, **dadurch gekennzeichnet, dass** die Stromversorgung mindestens eines Teils des Endgeräts, der gemäß einem der Funkkommunikationsmodi (M2) arbeitet, abgeschaltet wird und das Verfahren einen Schritt des Aufweckens des Teils durch einen zweiten Teil, der gemäß einem anderen Funkkommunikationsmodus (M1) arbeitet, und einen Schritt des Einstellens der Zeit des aufgeweckten Teils des Endgeräts umfasst.

3. Verfahren nach einem der vorhergehenden Ansprüche, **dadurch gekennzeichnet, dass** der erste und der zweite Funkkommunikationsmodus jeweils GSM- und/oder UMTS-Modi sind.

4. Tragbares Multimodus-Funkkommunikationsendgerät, das Steuerungsmittel umfasst und mindestens zwei Teile umfasst, die jeweils gemäß einer ersten oder einer zweiten Funkzugangstechnologie (RAT) kommunizieren können, die jeweils mit einem ersten und einem zweiten Funkkommunikationsmodus (M1, M2), die unterschiedlich sind, verbunden sind und jeweils mit einer ersten und einer zweiten Uhr (U1, U2) versehen sind, wobei das Endgerät Folgendes umfasst:
- Mittel zum Sperren eines ersten Teils des tragbaren Endgeräts in einem ersten der Funkkommunikationsmodi (M1) mit einer damit verbundenen ersten Uhr (U1);
- Mittel zum Berechnen des Zeitunterschieds (Δt) zwischen den Uhren (U1, U2) der zwei Funkkommunikationsmodi (M1, M2) durch das tragbare Endgerät;
- Mittel zum Korrigieren der Zeit eines zweiten Teils des Endgeräts auf Grundlage der Berechnung des Zeitunterschieds (Δt);
- Mittel zum Umschalten eines zweiten Teils des tragbaren Endgeräts in einen zweiten der Funkkommunikationsmodi (M2) mit der damit verbundenen zweiten Uhr (U2), **dadurch gekennzeichnet, dass**
die Mittel zum Berechnen des Zeitunterschieds (Δt) Folgendes umfassen:
- Mittel zum Erfassen des Beginns eines Funkrahmens (R1) der ersten Technologie (RAT), der mit dem ersten Funkkommunikationsmodus (M1) verbunden ist;
- Mittel zum Aufzeichnen der Zeit (T₁), die von der ersten Uhr (U1) angezeigt wird, die mit dem ersten Modus verbunden ist, und Auslösen eines Zählwerks (ΔK);
- Mittel zum Erfassen des Beginns eines Funkrahmens (R2) der Technologie (RAT), der mit dem zweiten Funkkommunikationsmodus (M2) verbunden ist;
- Mittel zum Aufzeichnen der aktualisierten Zeit (T₁'), die von der ersten Uhr angezeigt wird, die mit dem ersten Modus verbunden ist, und der Zeit (T₂), die von der zweiten Uhr (U2) angezeigt wird, die mit dem zweiten Funkkommunikationsmodus verbunden ist, und Anhalten des Zählwerks (ΔK);
- Mittel zum Berechnen des Zeitunterschieds (Δt) auf Grundlage der aufgezeichneten Zeiten von der ersten und der zweiten Uhr (T₁, T₂) und des Werts des Zählwerks (ΔK).

5. Tragbares Endgerät nach Anspruch 4, **dadurch gekennzeichnet, dass** das Zählwerk (ΔK) über eine Uhr (CLK) mit einer Periodizität verfügt, die kleiner als jene von Rahmenzählwerken der Funkzugangstechnologien ist.

6. Tragbares Endgerät nach einem der Ansprüche 4 bis 5, **dadurch gekennzeichnet, dass** es außerdem Mittel zum Schalten der Stromversorgung von mindestens einem Teil des Endgeräts auf Befehl der Steuerungsmittel umfasst.

7. Tragbares Endgerät nach einem der Ansprüche 4 bis 6, **dadurch gekennzeichnet, dass** es sich bei den Steuerungsmitteln des Endgeräts um ein Mikrosteuergerät handelt.
